# EUROPEAN PATENT APPLICATION

(11) **EP 2 811 391 A1**
(43) Date of publication of application: **10.12.2014**
(21) Application number: 14171404.8
(22) Date of filing: 05.06.2014
(51) Int. Cl.: G06F 3/0488, G06F 3/01, G06F 3/048

(54) **Method for transforming an object based on motion, gestures or breath input and electronic device thereof**

(30) Priority: 07.06.2013 KR 20130065205
(71) Applicant: Samsung Electronics Co., Ltd, Gyeonggi-do 443-742 (KR)
(72) Inventor: Han, Jong-Ho, Gyeonggi-do (KR); Park, Hye-Bin, Seoul (KR); Park, Hong-Sik, Seoul (KR)
(74) Representative: Nederlandsch Octrooibureau

(57) **Abstract**

A method for transforming an object in an electronic device is provided. The method includes displaying at least one object over at least a portion of a first display layer of a display, detecting input information associated with the at least one object, and transforming a shape of the at least one object based on the input information.

## Description

### TECHNICAL FIELD

The present disclosure relates to a method for transforming an object and an electronic device thereof

### BACKGROUND

With advances of information communication technology and semiconductor technology, various electronic devices are enabled as multimedia devices for providing diverse multimedia services. For example, the electronic device may provide various multimedia services such as a broadcasting service, a wireless Internet service, a camera service, and a music play service.

As the electronic device provides the multimedia services, a user of the electronic device desires more diverse services. Hence, the electronic device requires a service for satisfying user's diverse desires.

Accordingly, an apparatus and a method for transforming an object displayed on a display in an electronic device are desired.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address the above-mentioned problems and/or disadvantages and to provide at least the advantages described below. Accordingly, an aspect of the present disclosure is to provide an apparatus and a method for transforming an object displayed on a display in an electronic device.

Another aspect of the present disclosure is to provide an apparatus and a method for transforming a fog displayed on a display according to input information in an electronic device.

Yet another aspect of the present disclosure is to provide an apparatus and a method for transforming a fog displayed on a display according to breath of a user in an electronic device.

Still another aspect of the present disclosure is to provide an apparatus and a method for transforming a fog displayed on a display according to touch information in an electronic device.

A further aspect of the present disclosure is to provide an apparatus and a method for transforming a fog displayed on a display according to a user's gesture in an electronic device.

A further aspect of the present disclosure is to provide an apparatus and a method for transforming a lock screen which is displayed like a fog, according to input information in an electronic device.

A further aspect of the present disclosure is to provide an apparatus and a method for providing a fog display mode in an electronic device.

In accordance with an aspect of the present disclosure, a method for transforming an object in an electronic device is provided. The method includes displaying at least one object over at least a portion of a first display layer of a, detecting input information display associated with the at least one object, and transforming a shape of the at least one object based on the input information.

In accordance with another aspect of the present disclosure, an electronic device is provided. The electronic device includes a display, and at least one processor operatively coupled to the display, the at least one processor configured to perform operations including displaying at least one object over at least a portion of a first display layer of the display, detecting input information display associated with the at least one object, and transforming a shape of the at least one object based on input information.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an electronic device according to an embodiment of the present disclosure;
FIG. 2 illustrates a method for controlling a fog effect according to breath according to an embodiment of the present disclosure;
FIG. 3 illustrates a method for controlling a fog effect according to a breath according to another embodiment of the present disclosure;
FIGS. 4A, 4B, and 4C illustrate a screen of a fog effect based on a breath according to an embodiment of the present disclosure;
FIGS. 5A, 5B, and 5C illustrate a screen of a fog effect according to a motion of an electronic device according to an embodiment of the present disclosure;
FIG. 6 illustrates a method for controlling a fog effect according to touch information according to an embodiment of the present disclosure;
FIG. 7 illustrates a method for controlling a fog effect according to touch information according to another embodiment of the present disclosure;
FIGS. 8A, 8B, and 8C illustrate a screen of a fog effect based on touch information according to an embodiment of the present disclosure;
FIG. 9 illustrates a method for controlling a fog effect according to gesture information according to an embodiment of the present disclosure;
FIG. 10 illustrates a method for controlling a fog effect according to gesture information according to another embodiment of the present disclosure;
FIGS. 11A and 11B illustrate a screen of a fog effect according to gesture information according to an embodiment of the present disclosure;
FIG. 12 illustrates a method for providing a service in a fog effect according to an embodiment of the present disclosure;
FIG. 13 illustrates a method for displaying a fog according to an embodiment of the present disclosure;
FIGS. 14A, 14B, and 14C illustrate a screen of a fog effect according to an embodiment of the present disclosure; and
FIGS. 15A, 15B, and 15C illustrate a screen for a fog based on a motion of an electronic device according to an embodiment of the present disclosure.

Throughout the drawings, like reference numerals will be understood to refer to like parts, components and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Various embodiments of the present disclosure provide a technique for transforming an object displayed on a display according to input information in an electronic device.

Hereinafter, it is assumed that the electronic device transforms a fog effect superimposed on a service screen, according to input information. The fog effect is information displayed using a separate display layer superimposed on a first display layer displaying the service screen of the electronic device, may include an effect for displaying the display information of irregular transparency according to an air flow like a natural fog. Herein, the service screen may include at least one of an idle screen and a user interface screen based on an application program.

The electronic device may employ a portable electronic device capable of sending a message, a portable terminal, a mobile terminal, a mobile pad, a media player, a Personal Digital Assistant (PDA), a desktop computer, a laptop computer, a smart phone, a netbook computer, a television, a Mobile Internet Device (MID), an Ultra Mobile Personal Computer (UMPC), a tablet PC, a navigation system, a smart TV, a wrist watch, a digital camera, and an MP3 player, and the like. The electronic device may be an electronic device combining two or more functions of those devices.

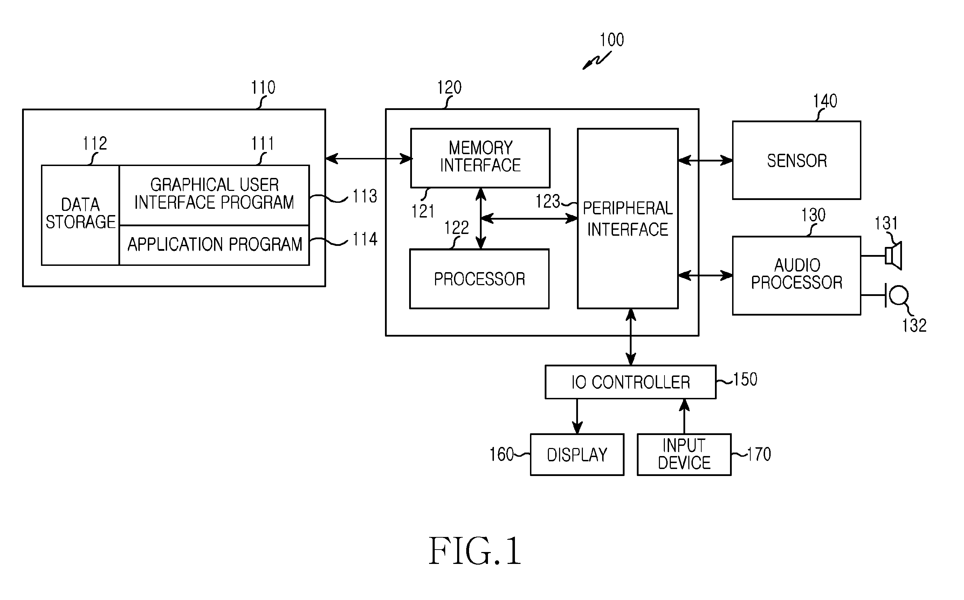

FIG. 1 is a block diagram of an electronic device according to an embodiment of the present disclosure.

Referring to FIG. 1, the electronic device 100 may include a memory 110, a processor 120, an audio processor 130, a sensor 140, an Input Output (IO) controller 150, a display 160, and an input device 170, but is not limited thereto. Herein, the electronic device 100 may include a plurality of memories 110.

The memory 110 may include a program storage 111 for storing a program to control operations of the electronic device 100, and a data storage 112 for storing data generating in the program execution. The memory 110 may employ a volatile memory (e.g., Random Access Memory (RAM)), a non-volatile memory (e.g., flash memory), or a combination of them.

The program storage 111 may include a Graphical User Interface (GUI) program 113 and one or more application programs 114. Herein, the program contained in the program storage 111 may be referred to as an instruction set which is a set of instructions.

The GUI program 113 may include one or more software components for providing the GUI on the display 160.

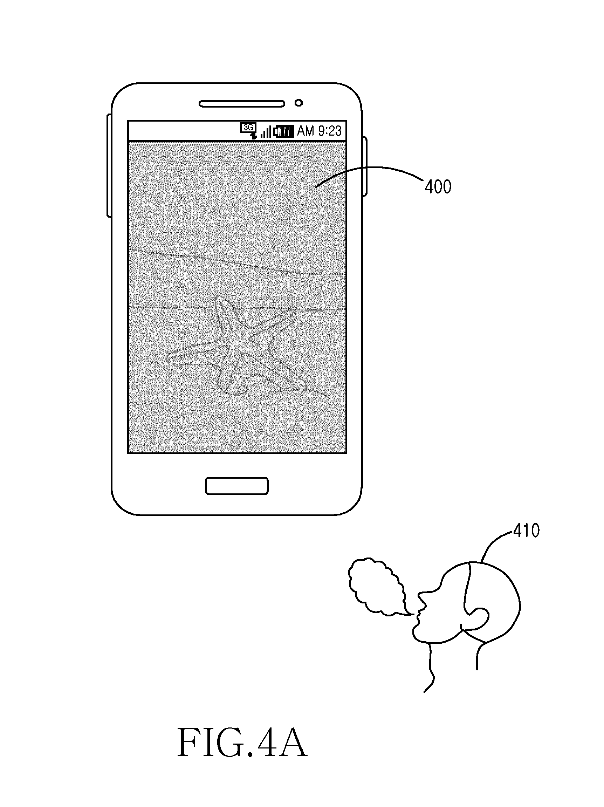

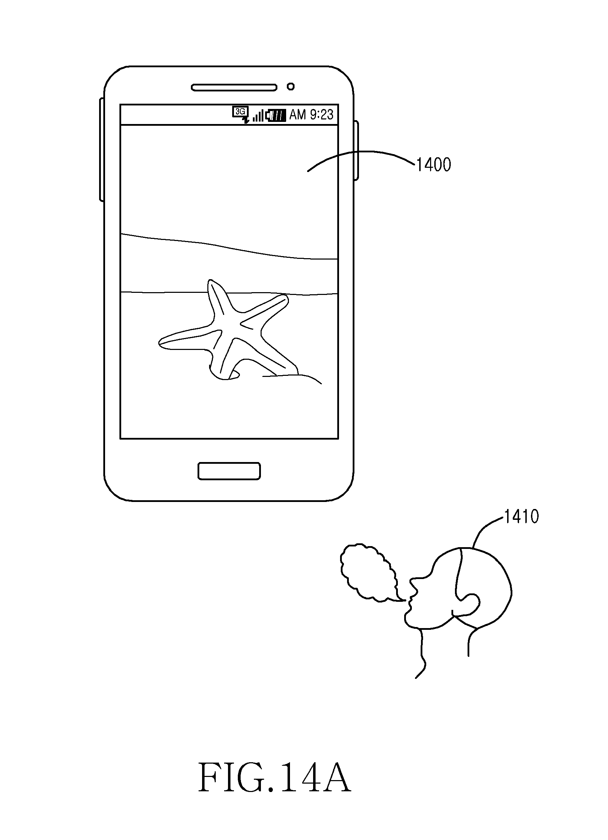

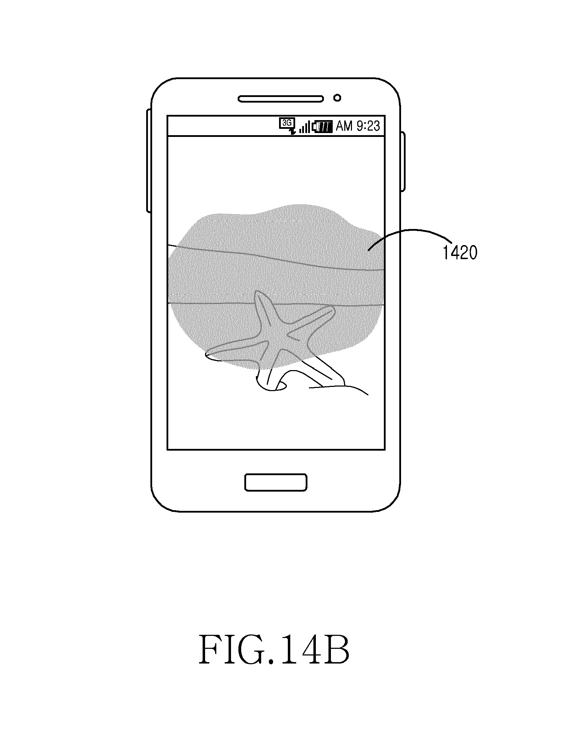

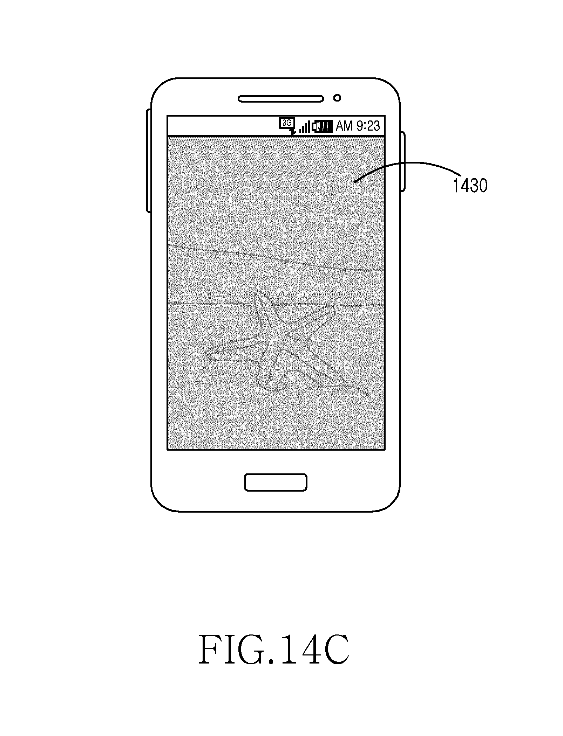

The GUI program 113 may control displaying the fog effect on the display 160. For example, the GUI program 113 may control displaying a lock screen 400 of FIG. 4A using the fog effect on the display 160. For example, the GUI program 113 may control displaying the fog on the display 160 according breath information fed from the input device 170 as shown in FIGS. 14A and 14B. When an intensity of the breath is greater than a reference intensity, the GUI program 113 may control displaying the fog all over the display 160 as shown in FIG. 14C.

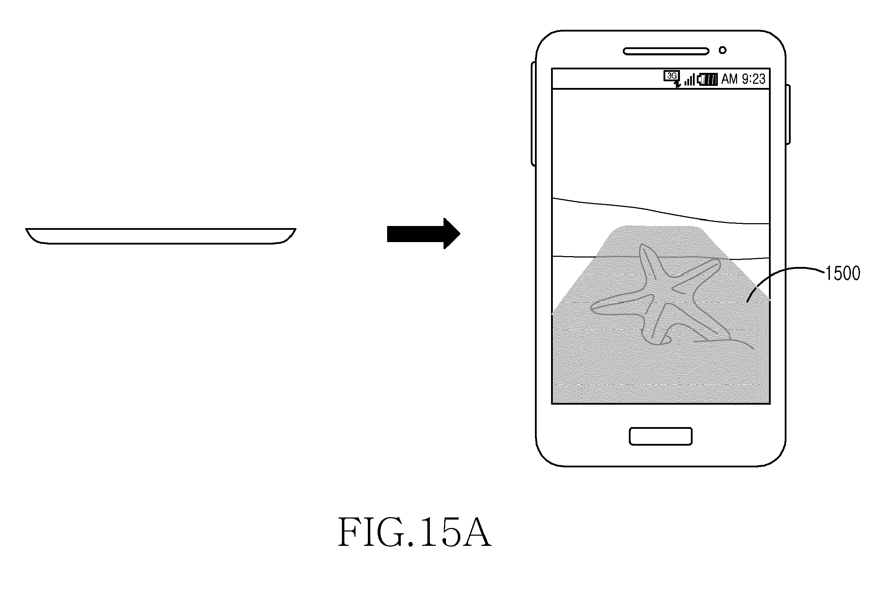

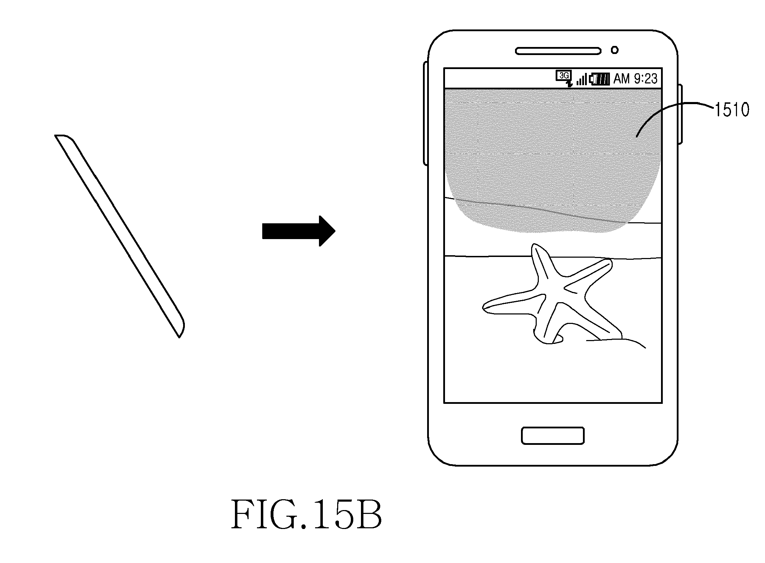

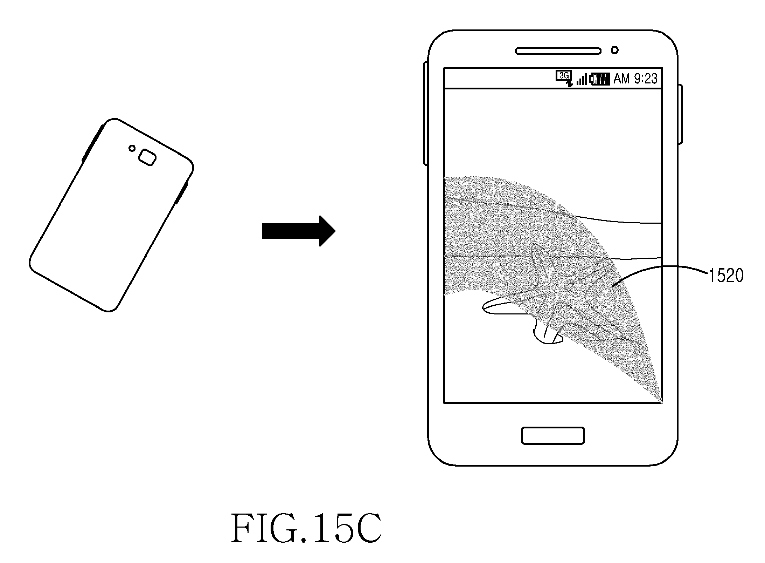

The GUI program 113 may control transforming a fog shape by considering at least one of a fog display time, a motion of the electronic device 100, and a direction of light. For example, the GUI program 113 may control transforming the fog shape displayed on the display 160 according to the motion of the electronic device 100 which is detected by the sensor 140 as shown in FIGS. 15A, 15B, and 15C. For example, the GUI program 113 may control lowering the fog transparency as the fog display time gets longer. For example, the GUI program 113 may control shading the fog on the display 160 according to the direction of light.

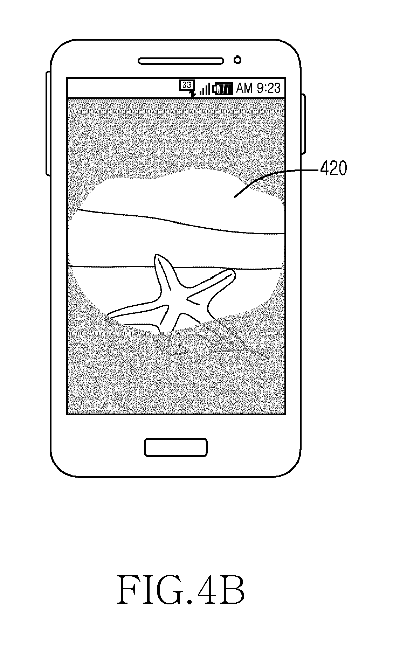

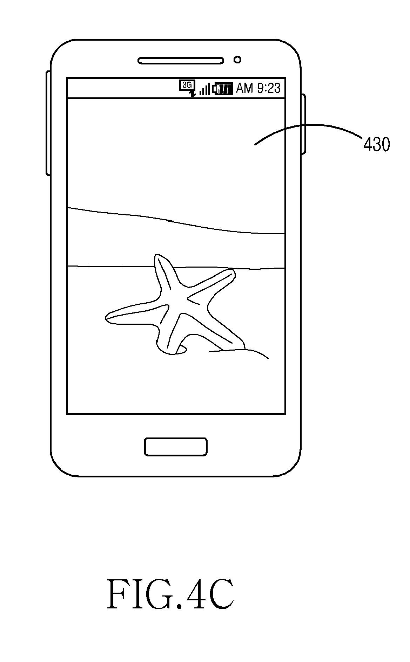

The GUI program 113 may control removing the fog on the display 160 according to user's input information. For example, when receiving the breath information from the input device 170 as shown in FIG. 4A, the GUI program 113 may control removing the fog by considering at least one of the breath intensity and the direction of light as shown in FIGS. 4B and 4C. When the breath intensity is greater than the reference intensity, the GUI program 113 may control removing all the fog from the display 160 as shown in FIG. 4C.

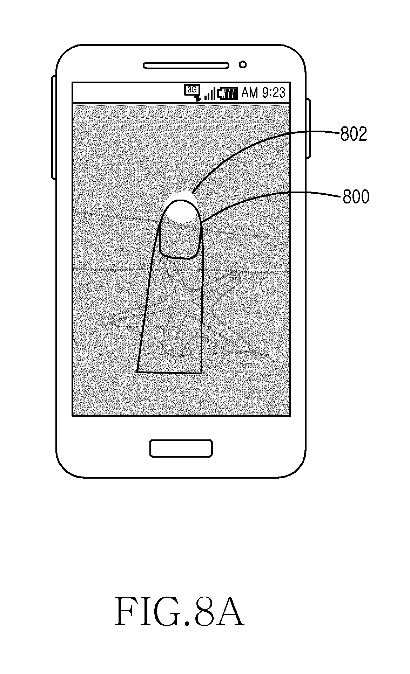

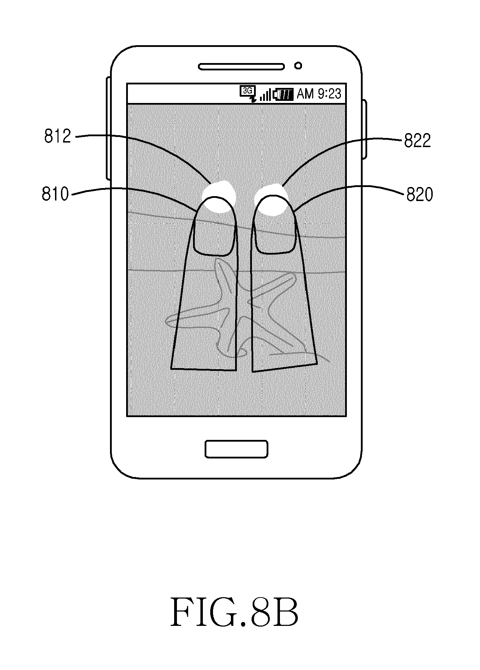

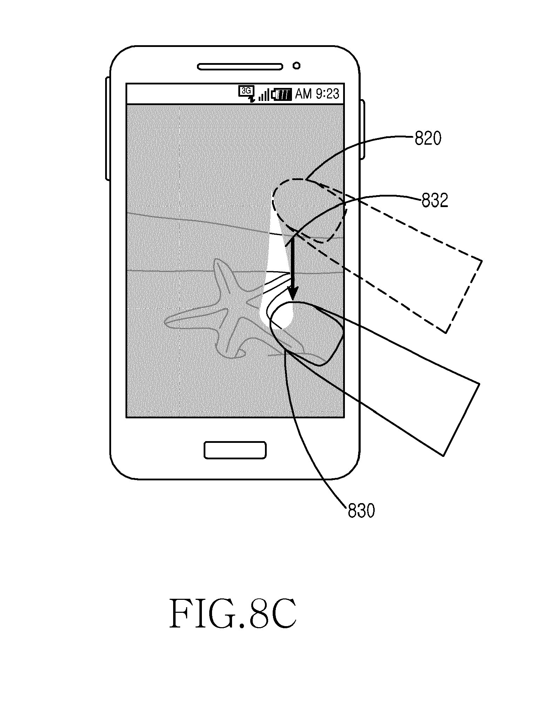

For example, the GUI program 113 may control removing the fog in a reference area based on a touch point according to touch information fed from the input device 170 as shown in FIGS. 8A and 8B. When detecting touch movement, the GUI program 113 may control changing the fog removal area according to the touch movement as shown in FIG. 8C. When a touch movement distance is greater than a reference distance, the GUI program 113 may control removing all the fog from the display 160 as shown in FIG. 4C.

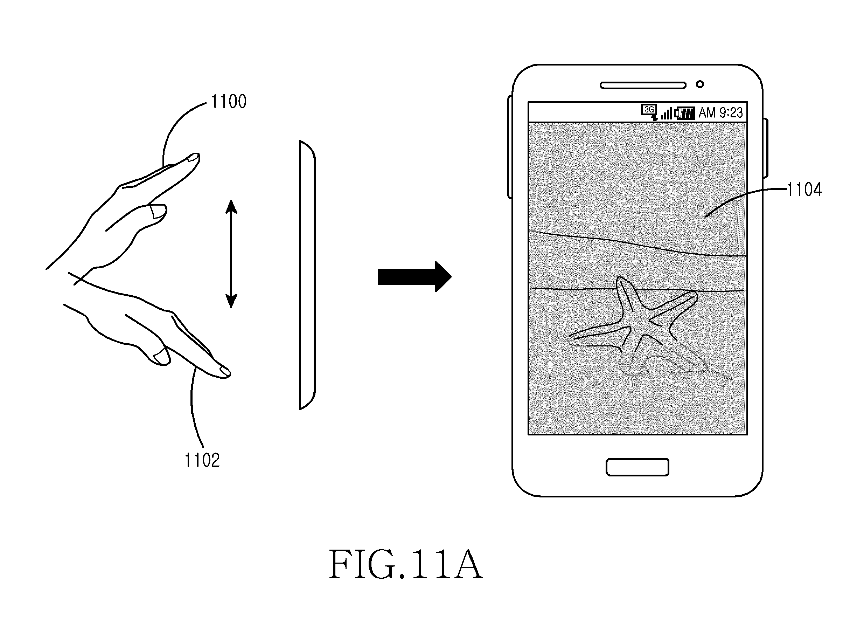

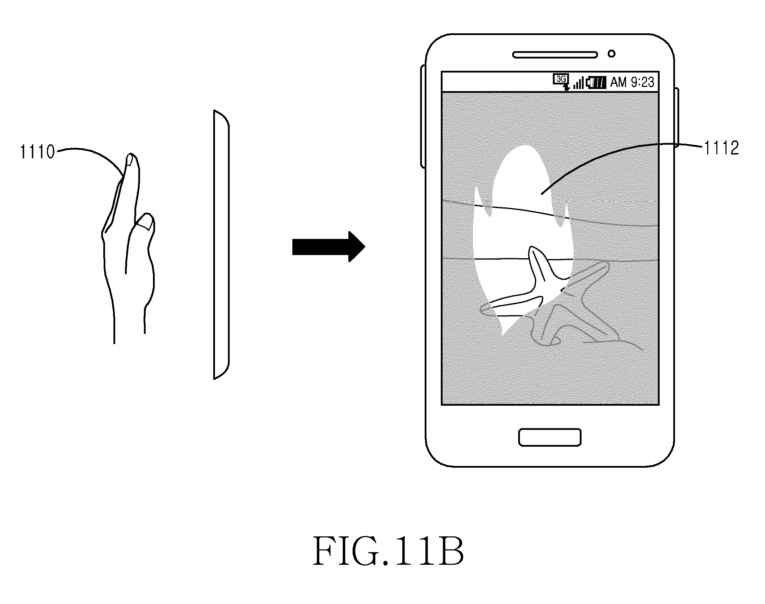

For example, the GUI program 113 may control removing the fog displayed on the display 160 according to user's gesture information fed from the sensor 140 as shown in FIGS. 11A and 11B. When a size of the gesture detection area is greater than a reference size, the GUI program 113 may control removing all the fog from the display 160 as shown in FIG. 4C.

The application program 114 may include a software component for at least one application program installed in the electronic device 100.

The processor unit 120 may include a memory interface 121, at least one processor 122, and a peripheral interface 123. Herein, the memory interface 121, the at least one processor 122, and the peripheral interface 123 of the processor unit 120 may be integrated onto at least one integrated circuit or implemented using separate components.

The memory interface 121 may control accessing of the components such as processor 122 and/or peripheral interface 123, to the memory 110.

The peripheral interface 123 may control connection between an IO peripheral of the electronic device 100, and the processor 122 and the memory interface 121.

The processor 122 controls the electronic device 100 to provide various multimedia services using at least one software program. In so doing, the processor 122 may control executing at least one program stored in the memory 110 and thus to provide the service corresponding to the program. For example, the processor 122 may control the fog effect by executing the GUI program 113.

The audio processor 130 may provide an audio interface between the user and the electronic device 100 through a speaker 131 and a microphone 132.

The sensor 140 may detect the motion of the electronic device 100 or the user's gesture. For example, the sensor 140 may include at least one of an accelerometer, a geomagnetic sensor, a gyroscope, and an altitude sensor, but is not limited thereto, and thus detect the motion of the electronic device 100. For example, the sensor 140 may detect the user's gesture by considering at least one of a camera, an infrared sensor, and a proximity sensor.

The IO processor 150 may provide an interface between an IO device such as display 160 and input device 170, and the processor 120.

The display 160 may display status information of the electronic device 100, a character input by the user, a moving picture, or a still picture. The display 160 may display application information driven by the processor 122.

The display 160 may display the fog effect under control of the processor 122. For example, the display 160 may display the lock screen 400 using the fog effect as shown in FIG. 4A. For example, the display 160 may display the fog according to the breath information fed from the input device 170 as shown in FIGS. 14A and 14B. When the intensity of the breath is greater than the reference intensity, the display 160 may display the fog all over the display 160 as shown in FIG. 14C. For example, the display 160 may display the fog in a display layer above the service screen. The display 160 may display the fog such that the fog slowly spreads according to the breath.

As such, when displaying the fog, the display 160 may display the fog in various shapes by stacking the display layers displaying the different fog shapes.

The display 160 may transform the fog shape by considering at least one of the fog display time, the motion of the electronic device 100, and the direction of light. For example, the display 160 may transform the fog shape according to the motion of the electronic device 100 which is detected by the sensor 140 as shown in FIGS. 15A, 15B, and 15C. For example, the display 160 may lower the fog transparency as the fog display time gets longer. For example, the display 160 may apply the different shade to the fog according to the direction of light.

The display 160 may remove the fog on the display 160 according to the user's input information. For example, the display 160 may remove the fog according to the breath information fed from the input device 170 as shown in FIGS. 4B and 4C. In so doing, the display 160 may remove the fog on the display 160 such that the fog slowly disperses according to the breath. When the intensity of the breath is greater than the reference intensity, the display 160 may display all the fog on the display 160 as shown in FIG. 4C. At this time, the fog removal by slowly dispersing the fog along the air flow on the display 160 may be referred to as a fog removal effect.

For example, the display 160 may remove the fog in the reference area based on the touch point according to the touch information fed from the input device 170 as shown in FIGS. 8A and 8B. When the touch movement is detected, the display 160 may change the fog removal area according to the touch movement as shown in FIG. 8C. In so doing, the display 160 may remove the fog at the touch point based on the touch movement and display the fog such that the fog slowly disperses at the touch release point based on the touch movement. When the touch movement distance is greater than the reference distance, the display 160 may remove all the fog from the display 160 as shown in FIG. 4C.

For example, the display 160 may remove the fog displayed on the display 160 according to user's gesture information fed from the sensor 140 as shown in FIGS. 11A and 11B. When the size of the gesture detection area is greater than the reference size, the display 160 may remove all the fog from the display 160 as shown in FIG. 4C.

As such, when removing at least part of the fog displayed on the display 160, the display 160 may display the service screen displayed below the fog display layer in the fog-free area. For example, the display 160 may display at least part of the idle screen in the fog-free area. For example, the display 160 may display at least one object of the idle screen in the fog-free area.

The input device 170 provides input data generated by a user's selection to the processor unit 122 through the IO controller 150. The input device 170 may include one or more of a keypad including at least one hardware button and a touchpad for detecting the touch. For example, the input device 170 may provide the touch information detected through the touchpad to the processor 122 through the IO controller 150. For example, when an audio signal of a frequency band defined as the breath is detected, the input device 170 may recognize that the breath is detected. Hence, the input device 170 may provide the breath detection information and the breath intensity to the processor 122 through the IO controller 150. Herein, the breath intensity may be determined based on the strength of the audio signal of the frequency band defined as to the breath.

The electronic device 100 may further include a communication system for voice communication and data communication. The communication system may be divided into a plurality of communication submodules for supporting different communication networks. For example, the communication networks may include one or more of, but not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a wireless Local Area Network (LAN), a Bluetooth network, and Near Field Communication (NFC).

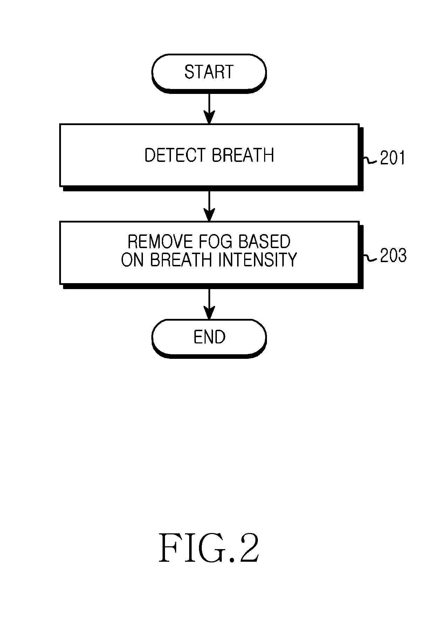

FIG. 2 is a flowchart of a method for controlling a fog effect according to breath according to an embodiment of the present disclosure. Now, the method for controlling the fog effect using screen configuration of the fog effect as shown in FIGS. 4A, 4B, and 4C is explained.

Referring to FIG. 2, the electronic device may detect the breath in operation 201. For example, the electronic device may display the lock screen 400 using the fog effect on the display 160 as shown in FIG. 4A. In so doing, when detecting the audio signal of the frequency band defined as the breath 410 through the input device 170, the electronic device may recognize the breath input from the user. For example, the electronic device may detect the user's breath input using an anemometer.

In operation 203, the electronic device may remove the fog from the display 160 according to the breath. For example, the electronic device may remove the fog of at least some areas 420 and 430 from the display 160 by considering at least one of the breath direction and the breath intensity as shown in FIGS. 4B and 4C. In so doing, the electronic device may remove the fog such that the fog slowly disperses according to the breath. When the breath intensity is greater than the reference intensity, the electronic device may remove all the fog 430 from the display 160 as shown in FIG. 4C.

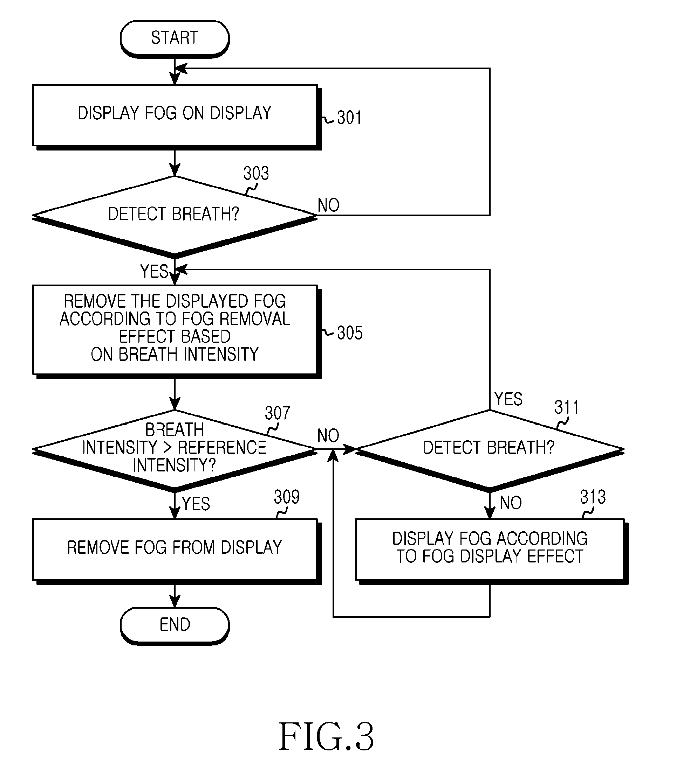

FIG. 3 is a flowchart of a method for controlling the fog effect according to the breath according to another embodiment of the present disclosure. Now, the method for controlling the fog effect using the screen configuration of the fog effect as shown in FIGS. 4A through 5C is explained.

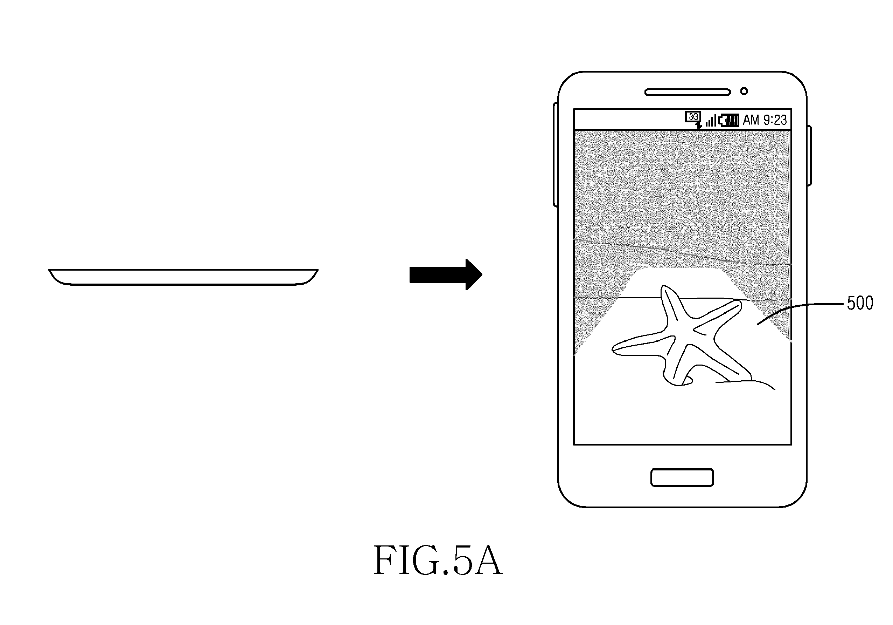

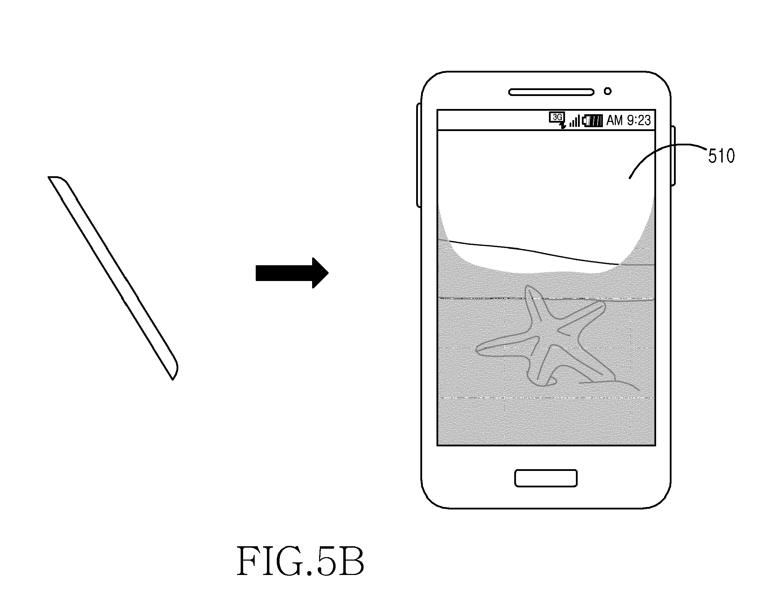

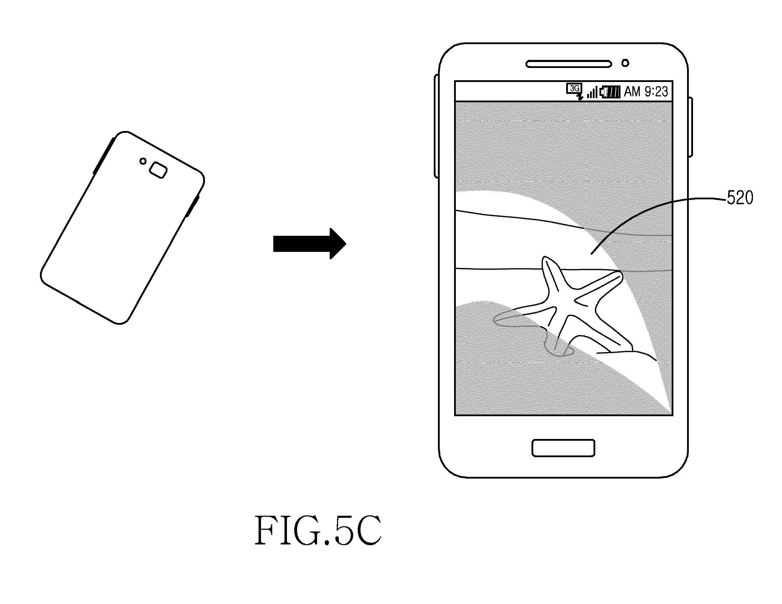

FIGS. 4A, 4B, and 4C illustrate a screen of the fog effect based on the breath according to an embodiment of the present disclosure. FIGS. 5A, 5B, and 5C illustrate a screen of the fog effect according to a motion of the electronic device according to an embodiment of the present disclosure.

Referring to FIG. 3, the electronic device may display the fog on the display 160 in operation 301. For example, the electronic device may display the lock screen 400 using the fog effect on the display 160 as shown in FIG. 4A. For example, the electronic device may display the fog by stacking the plurality of the display layers which display the fog in different shapes. In so doing, the electronic device may transform the fog shape displayed on the display 160 by considering at least one of the fog display time, the motion of the electronic device 100, and the light direction.

In operation 303, the electronic device may determine whether the breath is detected. For example, the electronic device may determine whether the audio signal of the frequency band defined as the breath 410 of FIG. 4A is detected through the input device 170.

When not detecting the breath, the electronic device may maintain the fog display of the display 160 in operation 301.

By contrast, when detecting the breath, the electronic device may remove the fog from the display 160 according to the breath in operation 305. In so doing, the electronic device may remove the fog such that the breath slowly disperses the fog. For example, the electronic device may remove the fog of at least some area 420 on the display 160 as shown in FIG. 4B. The electronic device may determine a direction, a speed, and a shape for removing the fog of at least some area on the display 160 by considering at least one of the breath direction and the breath intensity. The electronic device may transform the fog removal shape according to the motion information of the electronic device fed from the sensor 140 as shown in FIGS. 5A, 5B, and 5C. For example, the fog is removed from an area 500 when the orientation of the electronic device is changed as illustrated in FIG. 5A. The fog is removed from an area 510 when the orientation of the electronic device is changed as illustrated in FIG. 5B. The fog is removed from an area 520 when the orientation of the electronic device is changed as illustrated in FIG. 5C.

In operation 307, the electronic device determines whether the breath intensity is greater than the reference intensity.

When the breath intensity is smaller than or equal to the reference intensity, the electronic device determines whether the breath is detected in operation 311. For example, the electronic device may determine whether the audio signal of the frequency band defined as the breath is continuously detected through the input device 170.

When detecting no breath in operation 311, the electronic device may display the fog in the fog-free area in operation 313. In so doing, the electronic device may display the fog such that the breath slowly disperses the fog.

When detecting the breath in operation 311, the electronic device may remove the fog from the display 160 according to the breath in operation 305. In so doing, the electronic device may remove the fog such that the breath slowly disperses the fog.

When the breath intensity is greater than the reference intensity in operation 307, the electronic device may remove all the fog on the display 160 in operation 309. For example, when the breath intensity is greater than the reference intensity, the electronic device may remove all the fog 430 on the display 160 as shown in FIG. 4C.

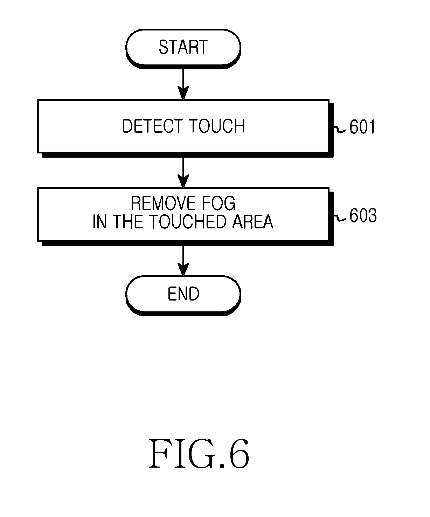

FIG. 6 is a flowchart of a method for controlling a fog effect according to the touch information according to an embodiment of the present disclosure. Now, the method for controlling the fog effect using the screen configuration of the fog effect as shown in FIGS. 8A, 8B, and 8C is explained.

Referring to FIG. 6, the electronic device may detect the touch in operation 601. For example, the electronic device may display the lock screen 400 using the fog effect on the display 160 as shown in FIG. 4A. In so doing, the electronic device may determine whether the touch is detected through the input device 170.

In operation 603, the electronic device may remove the fog of the detected touch area on the display 160. For example, the electronic device may remove the fog of at least one area 802, 812, and 822 as shown in FIGS. 8A and 8B. When the touch movement distance is greater than the reference distance, the electronic device may remove all the fog 430 from the display 160 as shown in FIG. 4C. Herein, the touch area may indicate a reference area based on the touch points 800, 810, and 820.

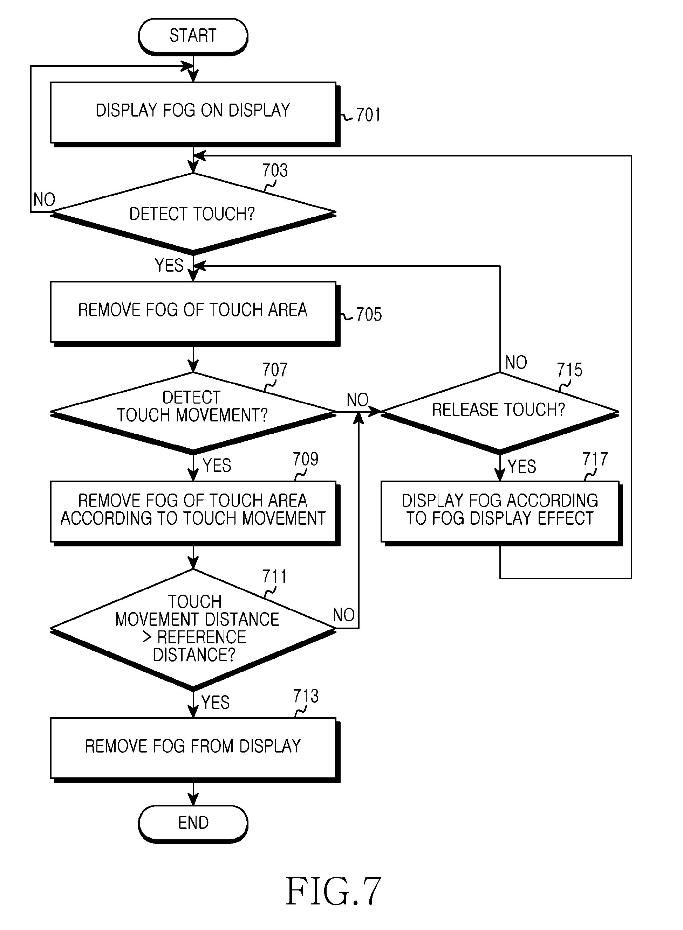

FIG. 7 is a flowchart of a method for controlling the fog effect according to the touch information according to another embodiment of the present disclosure. Now, the method for controlling the fog effect using the screen configuration of the fog effect as shown in FIGS. 8A, 8B, and 8C is explained.

FIGS. 8A, 8B, and 8C illustrate a screen of the fog effect based on the touch information according to an embodiment of the present disclosure.

Referring to FIG. 7, the electronic device may display the fog on the display 160 in operation 701. For example, the electronic device may display the lock screen 400 using the fog effect on the display 160 as shown in FIG. 4A. More specifically, the electronic device may display the fog by stacking the plurality of the display layers which display the fog in different shapes. The electronic device may transform the fog shape displayed on the display 160 by considering at least one of the fog display time, the motion of the electronic device 100, and the light direction.

In operation 703, the electronic device may determine whether the fog display area is touched.

When not detecting the touch in operation 703, the electronic device may maintain the fog display of the display 160 in operation 701.

By contrast, when detecting the touch in operation 703, the electronic device may remove the fog of the detected touch area in operation 705. For example, when detecting one touch 800 as shown in FIG. 8A, the electronic device may remove the fog of the reference area 802 defined by the touch point 800. For example, when detecting two touches 810 and 820 as shown in FIG. 8B, the electronic device may remove the fog of the reference areas 812 and 822 defined by the touch points 810 and 820.

In operation 707, the electronic device determines whether the touch moves. That is, the electronic device may determine whether the touch point detected in operation 703 moves.

When detecting no touch movement in operation 707, the electronic device determines whether the touch is released in operation 715.

When the touch is not released in operation 715, the electronic device may remove the fog of the detected touch area in operation 705.

When the touch is released in operation 715, the electronic device may display the fog at the touch release point in operation 717. In so doing, the electronic device may display the fog at the touch release point such that the fog slowly spreads like a natural event.

When detecting the touch movement in operation 707, the electronic device may change the fog release area according to the touch movement in operation 709. For example, when detecting the touch movement 820 → 830 as shown in FIG. 8C, the electronic device may change a fog removal area 832 according to the touch movement. In so doing, the electronic device may remove the fog in the reference area at the touched point, and the reference area of the touch release point may display the fog such that the fog slowly spreads.

In operation 711, the electronic device determines whether the touch movement distance is greater than the reference distance.

When the touch movement distance is smaller than or equal to the reference distance in operation 711, the electronic device may determine whether the touch is released in operation 715. For example, when the touch movement distance is smaller than or equal to the reference distance, the electronic device may determine whether the touch movement is detected continuously in operation 707.

When the touch movement distance is greater than the reference distance in operation 711, the electronic device may remove all the fog on the display 160 in operation 713. For example, the electronic may remove all the fog 430 on the display 160 as shown in FIG. 4C.

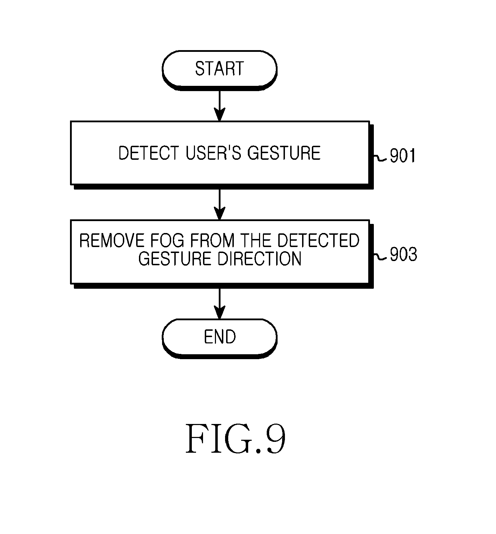

FIG. 9 is a flowchart of a method for controlling a fog effect according to gesture information according to an embodiment of the present disclosure. Now, the method for controlling the fog effect using the screen configuration of the fog effect as shown in FIGS. 11A and 11B is explained.

FIGS. 11A and 11B illustrate a screen of the fog effect according to the gesture information according to an embodiment of the present disclosure.

Referring to FIG. 9, the electronic device may detect the user's gesture in operation 901. For example, the electronic device may display the lock screen 400 using the fog effect on the display 160 as shown in FIG. 4A. In so doing, the electronic device may detect a user's hand motion 1100 to 1102 using the infrared sensor or the camera of the sensor 140 as shown in FIG. 11A. The electronic device may detect a user's hand shape 1110 using the camera of the sensor 140 as shown in FIG. 11B.

In operation 903, the electronic device may remove the fog of the user gesture detection area. For example, the electronic device may remove the fog of a user hand motion detection area 1104 as shown in FIG. 11A. In so doing, the electronic device may remove the fog such that the fog slowly disperses. For example, the electronic device may remove the fog of a user hand area 1112 as shown in FIG. 11B. In so doing, the electronic device may remove the fog to slowly disperse.

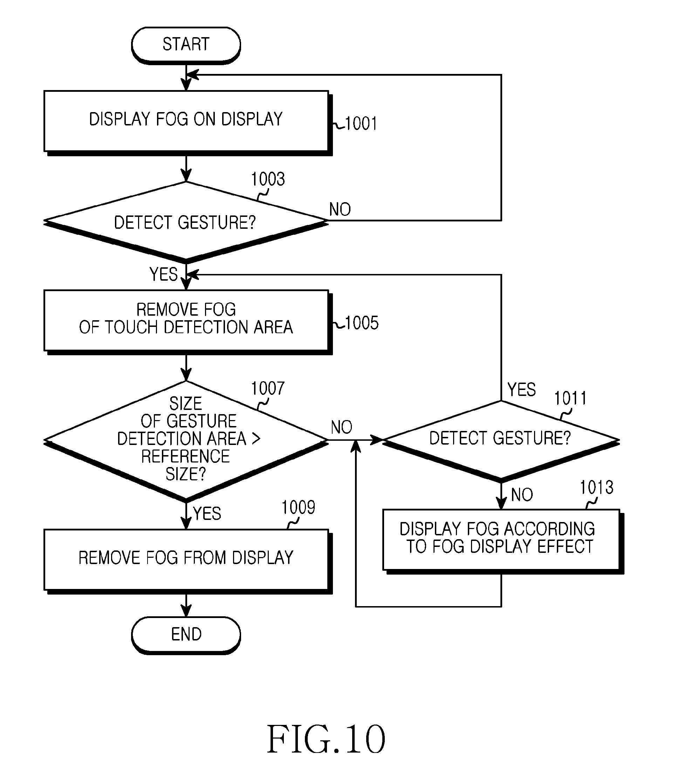

FIG. 10 depicts a method for controlling a fog effect according to gesture information according to another embodiment of the present disclosure. Now, the method for controlling the fog effect using the screen configuration of the fog effect as shown in FIGS. 11A and 11B is explained.

Referring to FIG. 10, the electronic device may display the fog on the display 160 in operation 1001. For example, the electronic device may display the lock screen 400 using the fog effect on the display 160 as shown in FIG. 4A. For example, the electronic device may display the fog by stacking the plurality of the display layers which display the fog in different shapes. The electronic device may transform the fog shape displayed on the display 160 by considering at least one of the fog display time, the motion of the electronic device 100, and the light direction.

In operation 1003, the electronic device may determine whether the user's gesture is detected. For example, the electronic device may detect the user's hand motion using the infrared sensor or the camera of the sensor 140 as shown in FIG. 11A. For example, the electronic device may detect the user's hand shape 1110 using the camera of the sensor 140 as shown in FIG. 11B.

When not detecting the user's gesture in operation 1003, the electronic device may maintain the fog display of the display 160 in operation 1001.

When detecting the user's gesture in operation 1103, the electronic device may remove the fog of the user gesture detection area in operation 1005. In so doing, the electronic device may remove the fog of the user gesture detection area such that the fog slowly disperses. For example, when detecting the user's hand motion as shown in FIG. 11A, the electronic device may detect the direction and the location of the user gesture motion using the infrared sensor or the camera of the sensor 140. Hence, the electronic device may remove the fog of the user gesture detection area 1104 by considering the motion direction of the user gesture. For example, the device may remove the fog of the user hand area 1112 as shown in FIG. 11B.

To remove the fog of the user gesture detection area, the electronic device determines whether the size of the user gesture detection area is greater than the reference size in operation 1007.

When the size of the user gesture detection area is smaller than or equal to the reference size in operation 1007, the electronic device may determine whether the user's gesture is detected in operation 1011. For example, the electronic device may determine whether the user's gesture is continuously detected through the sensor 140.

When not detecting the user's gesture in operation 1011, the electronic device may display the fog in the fog-free area in operation 1013. In so doing, the electronic device may display the fog such that the fog slowly spreads.

When detecting the user's gesture in operation 1011, the electronic device may remove the fog in the user gesture detection area in operation 1005.

When the size of the user gesture detection area is greater than the reference size in operation 1007, the electronic device may remove all the fog on the display 160 in operation 1009.

As such, the electronic device may remove at least part of the fog displayed on the display 160 according to at least one input information. When displaying the fog effect on the display 160 by stacking the multiple fog display layers for the different fog shapes, the electronic device may remove the fog of at least some area by removing at least one fog display layer according to at least one input information. For example, the electronic device may remove the fog of the fog display layers based on a display order of the fog display layers according to at least one input information. For example, the electronic device may remove the fog of at least one fog display layer according to at least one input information.

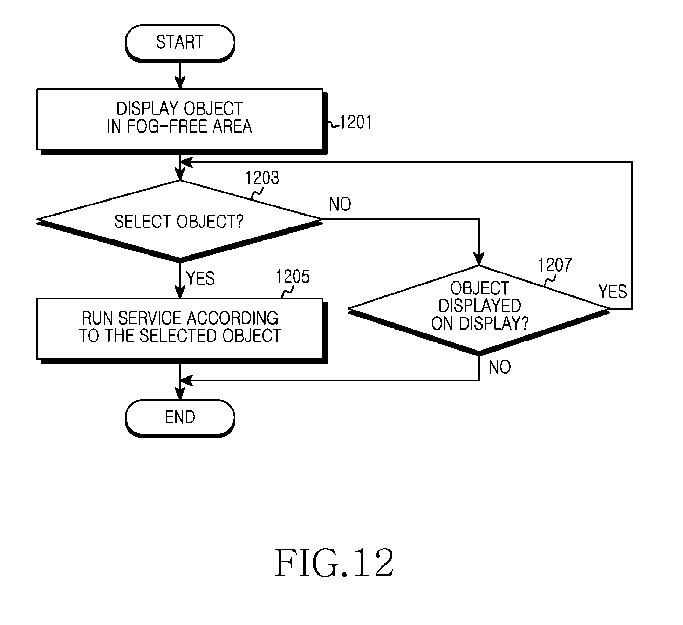

When removing the fog of at least some area, the electronic device may display the service screen below the fog display layer in the fog-free area. Thus, the electronic device may provide the service according to whether an object displayed in the fog-free area is selected as shown in FIG. 12.

FIG. 12 is a flowchart of a method for providing a service in a fog effect according to an embodiment of the present disclosure.

Referring to FIG. 12, the electronic device may display at least one object in the fog-free area in operation 1201. For example, the electronic device may display the lock screen 400 using the fog effect on the display 160 as shown in FIG. 4A. When detecting the user's input information through the input device 170 or the sensor 140, the electronic device may remove the fog of at least some area according to the input information. In so doing, the electronic device may display the service screen below the fog display layer in the fog-free area. Herein, the object may include an icon for executing an application or setting a menu.

In operation 1203, the electronic device may determine whether at least one of the one or more objects displayed on the display 160 is selected in operation 1203. For example, the electronic device may determine whether at least one of the one or more objects displayed in the fog-free area is touched.

When the object is not selected in operation 1203, the electronic device may determine whether the object is displayed on the display 160 in operation 1207. For example, when detecting no input information for removing the fog, the electronic device may re-display the fog in the fog-free area. Hence, the electronic device may determine whether the fog-free area exists or not. When the fog-free area exists, the electronic device may determine whether the object is displayed in the fog-free area.

When no object is displayed on the display in operation 1207, the electronic device may finish this process.

When the object is displayed on the display in operation 1207, the electronic device may determine whether at least one of one more objects displayed on the display 160 is selected in operation 1203.

When the object is selected in operation 1203, the electronic device may run the service according to the selected object in operation 1205. That is, the electronic device may run the service according to the object displayed in the fog-free area even when the lock screen using the fog effect is not released.

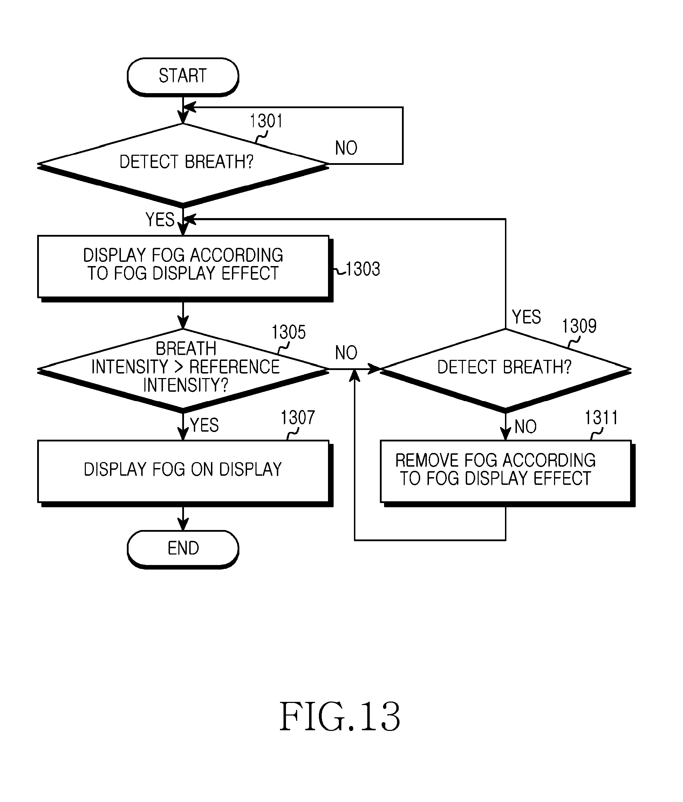

FIG. 13 is a flowchart of a method for displaying the fog according to an embodiment of the present disclosure. Now, the method for displaying the fog using the screen configuration of the fog effect of FIGS. 14A through 15C is explained.

FIGS. 14A, 14B, and 14C illustrate a screen of the fog effect according to an embodiment of the present disclosure. FIGS. 15A, 15B, and 15C illustrate a screen for the fog based on the motion of the electronic device according to an embodiment of the present disclosure.

Referring to FIG. 13, the electronic device may determine whether the breath is detected during the service in operation 1301. For example, the electronic device may determine whether the audio signal of the frequency band defined as the breath is detected through the input device 170 during the service of a first application program.

Upon detecting the breath in operation 1301, the electronic device may display the fog on the display 160 according to the breath in operation 1303. In so doing, the electronic device may generate the fog such that the breath slowly spreads the fog. For example, when detecting the breath 1410 during an image display service 1400 as shown in FIG. 14A, the electronic device may display the fog in at least some area 1420 of the display 160 as shown in FIG. 14B. In so doing, the electronic device may determine the direction, the speed, and the shape for displaying the fog in at least some area of the display 160 by considering at least one of the breath direction and the breath intensity. The electronic device may transform of the fog display shape according to the motion information of the electronic device fed from the sensor 140 as shown in FIGS. 15A, 15B, and 15C. For example, the fog is displayed in an area 1500 when the orientation of the electronic device is changed as illustrated in FIG. 15A. The fog is displayed in an area 1510 when the orientation of the electronic device is changed as illustrated in FIG. 15B. The fog is displayed in an area 1520 when changing orientation of the electronic device is changed as illustrated in FIG. 5C.

To display the fog according to the breath, the electronic device may determine whether the breath intensity is greater than the reference intensity in operation 1305.

When the breath intensity is smaller than or equal to the reference intensity in operation 1305, the electronic device may determine whether the breath is detected in operation 1309. For example, the electronic device may determine whether the audio signal of the frequency band defined as the breath is continuously detected through the input device 170.

When detecting no breath in operation 1309, the electronic device may remove the fog from the display 160 in operation 1311. In so doing, the electronic device may remove the fog such that the breath slowly disperses the fog.

When detecting the breath in operation 1309, the electronic device may display the fog on the display 160 according to the breath in operation 1303. In so doing, the electronic device may generate the fog such that the fog slowly spreads according to the breath.

When the breath intensity is greater than the reference intensity in operation 1305, the electronic device may display the fog all over the display 160 in operation 1307. For example, when the breath intensity is greater than the reference intensity, the electronic device may display the fog all over the area 1430 of the display 160 as shown in FIG. 14C.

As set forth above, when displaying the fog according to the breath during the service, the electronic device may display at least one fog display layer above the service screen display layer. In so doing, the electronic device may not switch to a power-saving mode while the fog is displayed.

As the electronic device transforms the fog display of the display according to the input information, the electronic device may attract the user's interest.

In addition, since the electronic device controls not to enter the power-saving mode while the display displays the fog, the user does not have to frequently release the power-saving mode.

It will be appreciated that various embodiments of the present disclosure according to the claims and description in the specification may be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are various embodiments of machine-readable storage that are suitable for storing a program or programs comprising instructions that, when executed, implement various embodiments of the present disclosure.

Accordingly, various embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and various embodiments suitably encompass the same.

While the present disclosure has been shown and described with reference to certain various embodiments thereof, it will be understood by those skilled in the art that various changes in form and details may be made therein without departing from the spirit and scope of the present disclosure as defined by the appended claims and their equivalents.

## Claims

1. A method in an electronic device, the method comprising:
displaying at least one object over at least a portion of a first display layer of a display;
detecting input information associated with the at least one object; and
transforming a shape of the at least one object based on the input information.

2. The method of claim 1, wherein the transforming of the shape of the at least one object comprises:
when detecting a breath input, transforming the shape of the at least one object based on at least one of a direction and an intensity of the breath input.

3. The method of claim 1, further comprising:
when transforming the shape of the at least one object, displaying information of the first display layer in at least some area wherein the shape of the at least one object is transformed.

4. The method of claim 1, wherein the transforming of the shape of the at least one object comprises:
when detecting touch, transforming the shape of the at least one object in a touch detection area.

5. The method of claim 4, further comprising:
when detecting movement of the touch, transforming the shape of the at least one object in a touch detection area according to the touch movement; and
restoring the shape of the at least one object in a touch release area according to the touch movement.

6. An electronic device comprising:
a display; and
at least one processor operatively coupled to the display, the at least one processor configured to perform operations comprising:
displaying at least one object over at least a portion of a first display layer of the display;
detecting input information associated with the at least one object; and
transforming a shape of the at least one object based on the input information.

7. The method of claim 1 or the electronic device of claim 6, wherein the at least one object comprises at least one object of a fog effect.

8. The method of claim 7 or the electronic device of claim 7, wherein the displaying at least one object comprises superimposing and displaying a plurality of display layers comprising at least one object of a different shape of the fog effect, on the first display layer.

9. The electronic device of claim 6, wherein the processor is configured to, when detecting a breath input, transform the shape of the at least one object based on at least one of a direction and an intensity of the breath input.

10. The electronic device of claim 6, wherein, when transforming the shape of the at least one object, the display is configured to display information of the first display layer in at least some area wherein the shape of the at least one object is transformed.

11. The electronic device of claim 6, further comprising:
a sensor configured to detect a gesture input,
wherein the sensor comprises at least one of an infrared sensor, a camera, and a proximity sensor.

12. The electronic device of claim 11, wherein, when detecting the gesture input through the sensor, the processor is configured to transform the shape of the at least one object based on at least one of a gesture input direction and a gesture input range.

13. The electronic device of claim 6, wherein, when detecting touch, the processor is configured to transform the shape of the at least one object in a touch detection area.

14. The electronic device of claim 13, wherein, when detecting movement of the touch, the processor is configured to transform the shape of the at least one object in a touch detection area according to the touch movement, and to restore the shape of the at least one object in a touch release area according to the touch movement.

15. The electronic device of claim 6, further comprising:
a sensor configured to detect a breath input,
wherein the sensor comprises at least one of a microphone, a touchscreen capacitive sensor, a touchscreen resistive sensor, a touchscreen ultrasonic sensor and touchscreen electromagnetic interference sensor.
